# EUROPEAN PATENT APPLICATION

(11) **EP 4 729 195 A1**
(43) Date of publication of application: **22.04.2026**
(21) Application number: 25195378.2
(22) Date of filing: 12.08.2025
(51) Int. Cl.: B09B 3/35, B02C 18/08, C08L 95/00

(54) **METHOD AND DEVICE FOR MANUFACTURING ADDITIVES FOR MINERAL-ASPHALT MIXTURES FROM UNSORTED MUNICIPAL WASTE AND AN ADDITIVE FOR MINERAL-ASPHALT MIXTURES**

(30) Priority: 16.08.2024 PL 44951924
(71) Applicant: ACI PROXIMA 8 SPOLKA Z OGRANICZONA ODPOWIEDZIALNOSCIA, 55-002 Dobrzykowice (PL)
(72) Inventor: Pogodzinski, Pawel, 55-093 Kielczow (PL); Stuczyk, Krystian, 56-210 Wasosz (PL); Karnas, Renata, 50-231 Wroclaw (PL); Wrobel, Agnieszka, 54-029 Wroclaw (PL); Skrzynski, Stanislaw, 56-210 Wasosz (PL); Gajkowski, Slawomir, 56-210 Wasosz (PL); Kondracki, Kamil, 56-210 Wasosz (PL); Strozynski, Lukasz, 56-210 Wasosz (PL); Kamil, Kowalski, 56-210 Wasosz (PL); First, Karol, 56-210 Wasosz (PL); Smolan, Dawid, 56-210 Wasosz (PL)
(74) Representative: Bury & Bury

(57) **Abstract**

A method for manufacturing additives for mineral-asphalt mixtures from unsorted mixed municipal waste, in which the waste is mechanically shredded and the fraction unsuitable for reuse is separated therefrom using separation screens, a ferromagnetic separator and a conveyor belt, is distinguished in that the pre-shredded and screened waste is subjected to final shredding (131) in a high-speed shredder equipped with cutting knives (402) and counter-knives (401) with adjustable positions, and a screen (403) with a mesh size substantially less than 25 mm, preferably less than 15 mm, most preferably in the range of substantially 5 to 10 mm, wherein the distance between the cutting knives (402) and the screen (403) is set in the range of 2 to 11 cm, preferably 5 to 7 cm, most preferably 4 to 6 cm. A device for manufacturing additives for mineral-asphalt mixtures from unsorted mixed municipal waste, equipped with feed hoppers, shredders, ferromagnetic separators, separation screens, and an air separator, is distinguished by the fact that it is further equipped with a high-speed shredder equipped with cutting knives (402) and counter-knives (401) with adjustable positions, and a separation screen (403) with a mesh size substantially less than 25 mm, preferably less than 15 mm, and most preferably in the range of substantially 5 to 10 mm. Additives for mineral-asphalt mixtures produced from unsorted mixed municipal waste using the method according to the invention.

## Description

The invention provides a method for manufacturing additives for mineral-asphalt mixtures from unsorted municipal waste, a device for manufacturing additives for mineral-asphalt mixtures from unsorted municipal waste, and an additive for mineral-asphalt mixtures.

The production of additives for mineral-asphalt mixtures from waste is known. European patent publication no. EP3966273B1 discloses a method for manufacturing additives for bituminous conglomerates. The starting material is waste, including municipal waste, containing mixed plastics, including at least one thermoplastic polyolefin polymer. The raw material is washed, and the plastics are separated, shredded, mixed with polyvinyl butyral (PVB), and further shredded. The criterion for separating the plastics is the material's density. The final processing result is granulate with a grain size of 4-6 mm. As mentioned, the process requires washing and separation of plastics and the use of a PVB additive.

Also is known, from document US11267948, a method and system for manufacturing construction materials from plastic waste combined with waste from industrial agricultural production. In this method, the plastic raw material is separated from the plastic waste, selected, and ground into a powder. The waste from industrial agricultural production is disinfected, selected, and ground into a powder. The powders are then mixed with each other, catalysts, and additives, compressed to 3-10 mm grains and dried. The resulting grains can be used for manufacturing construction materials and as asphalt additives.

The solution disclosed in patent document EP243747B1 concerns the process of separating and processing desirable waste materials, such as paper and plastic, from other waste components, including municipal waste. The creators of this solution realized that it was possible to obtain the desired fractions after preliminary shredding of the waste, which allowed separation by air blowing. This is possible before drying, because during blowing, the sticky components are identified as "heavy fractions" and are not separated. The obtained light fractions are fed for further use or further shredding. The final products consist of three fractions containing mainly fibers and one dust fraction. The light fractions can optionally be recycled without further processing. If a fine-fiber structure is desired, an additional shredder is required. The obtained fractions constitute an energy material or a raw material for paper production. Particularly heavy granulates can be used as a fertilizer or an additive to asbestos, cement, brick, or bituminous products.

European patent EP0448424B1 discloses a bituminous composition containing waste polymers and cross-linked materials. Polymers derived from sterile automotive waste are ground into a powder. The resulting powder is then washed with water, dried, and mixed with bitumen powder. The resulting mixture is pressed into bricks or granulated.

Document US20120048974 discloses a recycling method and system in which a stream of mixed solid waste, such as municipal waste, is separated into intermediate waste streams enriched with individual recyclable materials. The latter are effectively separated from the intermediate streams using mechanical sorting. The waste in the mixed waste stream is ground, and mechanical sorting is based on differences in size and density of the sorted streams. Recyclable materials belong to groups containing paper, plastics, and non-ferrous metals.

A method for manufacturing a granulated asphalt-concrete mixture from industrial and municipal waste is disclosed in Russian document RU2762177C1. This document discloses the use of processed PTFE waste as an additive in asphalt-concrete mixtures to increase their durability. The waste is selected and added to mineral powder at the material's melting point, creating a mixture that binds asphalt granules 5-10 mm in size. Prior art solutions require the selection of waste during production or the use of additional processes (such as washing) for mixed waste. The aim of the invention is to avoid these and other disadvantages and simplify the production process of asphalt additives. An additional goal is to obtain additives with different properties in essentially the same production line.

Regulations on waste classification vary across the European Community. At the date of filing this invention, the Regulation of the Minister of Climate of 2 January 2020 on the waste catalogue is applicable in Poland. According to the aforementioned Regulation, the number 19 12 12 refers to "other waste (including mixed substances and objects) from mechanical treatment of waste other than those listed as 19 12 11" (the number 19 12 11 includes hazardous substances). Unsorted (mixed) municipal waste is designated with the number 20 03 01.

A method for manufacturing additives for mineral-asphalt mixtures from unsorted mixed municipal waste, in which the waste is mechanically shredded and the non-reusable fraction is separated therefrom using separation screens and a ferromagnetic separator, according to the invention is distinguished in that the pre-shredded and screened waste is subjected to final shredding in a high-speed shredder equipped with cutting knives and counter-knives with adjustable positions, and a screen with a mesh size substantially less than 25 mm, preferably less than 15 mm, most preferably in the range of substantially 5 to 10 mm, wherein the distance between the cutting knives and the screen is set in the range of 2 to 11 cm, preferably in the range of 5 to 7 cm, most preferably in the range 4 to 6 cm.

The distance between the knives and the counter-knives is preferably set in the range of 1 to 7 mm, more preferably in the range of 2 to 6 mm.

In a preferred embodiment, prior to shredding in the high-speed shredder, the waste is shredded and the fraction of waste substantially larger than 35 mm is separated therefrom using a separation screen, an air separator, and a ferromagnetic separator.

Prior to separating the fraction of waste substantially larger than 35 mm, the fraction of waste substantially larger than 80 mm that is not suitable for reuse is preferably separated using a separation screen and a ferromagnetic separator.

The rotational speed of the high-speed shredder shaft is preferably selected in the range of 1200 to 1550 rpm, depending on the intended product parameters.

To obtain a mastic stabilizer used as an additive to stored mineral-asphalt mixtures, the distance between the cutting knives of the high-speed shredded and the screen is preferably set in the range of 3 to 7 cm, more preferably in the range of 4 to 6 cm, the distance between the knives and the counter-knives is preferably set in the range of 1 to 4 mm, more preferably in the range of 2 to 4 mm, and the shaft rotational speed is preferably set in the range of 1350 to 1550 rpm.

In order to obtain an additive introduced to hot-mix mineral-asphalt mixtures, the distance between the cutting knives of the high-speed shredder and the screen is preferably set in the range of 6 to 10 cm, more preferably in the range of 7 to 9 cm, the distance between the knives and the counter-knives is preferably set in the range of 3 to 7 mm, more preferably in the range of 4 to 6 mm, and the rotational speed of the shaft is preferably set in the range of 1200 to 1400 rpm.

In a preferred embodiment, the degree of pre-shredding of the waste fraction fed to the high-speed shredder is selected so as to avoid melting of the processed waste fraction in the high-speed shredder.

A device for manufacturing additives for mineral-asphalt mixtures from unsorted mixed municipal waste, equipped with feed hoppers, shredders, ferromagnetic separators, separation screens, and an air separator, according to the invention is distinguished in that it is further equipped with a high-speed shredder equipped with cutting knives and counter-knives with adjustable positions, and a separation screen with a mesh size substantially less than 25 mm, preferably less than 15 mm, most preferably in the range of substantially 5 to 10 mm.

The high-speed shredder is preferably adapted to adjust the distance between the knives and the counter-knives in the range of 1 to 7 mm, more preferably in the range of 2 to 6 mm.

In a preferred embodiment, the high-speed shredder is preferably adapted to adjust the distance between the cutting knives and the screen in the range of 2 to 11 cm, more preferably 5 to 7 cm, and most preferably in the range of 4 to 6 cm.

The separation screen in the shredder located upstream the high speed shredder in the technological chain, preferably has a mesh size of less than 45 mm, more preferably less than 40 mm, and most preferably less than 35 mm.

In a preferred embodiment, at least two shredders with separation screens of different mesh sizes are installed upstream the high-speed shredder in the technological chain.

The preferred additive for mineral-asphalt mixtures is preferably manufactured from unsorted mixed municipal waste using the method according to the invention.

The invention is illustrated in exemplary embodiments in the figures of the drawing, where
Fig. 1 shows a flow chart of the method according to the invention,
Fig. 2 shows a simplified schematic view of an installation for shredding and screening waste through an 80 mm mesh screen,
Fig. 3 shows a simplified schematic view of an installation for shredding and screening waste through a 35 mm mesh screen, and
Fig. 4 shows a simplified view of a high-speed shredder with adjustable knife positioning.

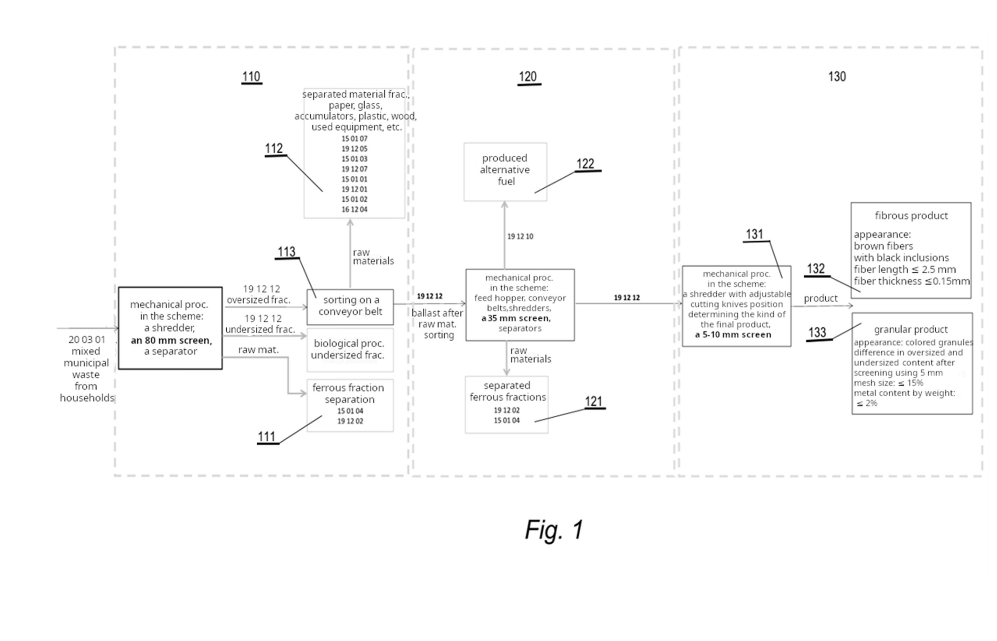

Fig. 1 shows an exemplary flow chart of the method according to the invention. In the first step 110, waste classified under code 20 03 01, i.e., unsorted (mixed) municipal waste, is shredded, screened, and separated to isolate the waste fractions larger than 80 mm that are unsuitable for reuse. In this step, ferrous fractions 111 are separated in a known manner, material fractions 112 are separated during sorting on a conveyor belt 113, and the undersized fraction is biologically processed. This results in ballast after raw material sorting, classified under code 19 12 12.

This ballast is further processed in the second step of shredding, screening, and waste separation 120 to separate the waste fractions passed through a screen with a mesh size of less than 35 mm. In this step, a second separation of ferrous materials 121 and separation of material for alternative fuel 122 take place.

In the final shredding step 130 of the waste stream, the waste is mechanically processed 131 in a high-speed shredder with adjustable knife position relative to each other and to the screen and adjustable rotational speed.

In an exemplary embodiment of the method according to the invention, a round mesh screen with a hole diameter of 5-10 mm is used in the final shredding step.

In order to obtain the mastic stabilizer 132, the distance between the knives and the screen in an exemplary embodiment is set to 4-6 cm, the distance between the knives and the counter-knives is set to 2-4 mm, and the shredder shaft rotational speed is set to 1350-1550 rpm.

In order to obtain the additive introduced into hot-mix asphalt mixtures 133, the distance between the knives and the screen in an exemplary embodiment is set to 7-9 cm, the distance between the knives and the counter-knives is set to 4-6 mm, and the shredder shaft rotational speed is set to 1200-1400 rpm.

Surprisingly, it turned out that only a multi-step (at least three-step) method of processing waste with code 19 12 12, in which each step gradually reduces the size of the processed material, enables preventing melting. Attempts to process waste with code 19 12 12 solely in a high-speed shredder resulted in melting of the material, and in consequence the inability to manufacture the desired products due to the device clogging.

Waste with code 19 12 12 is characterized by low density and a fine, lightweight form, requiring specific selection of knife thickness, knife spacing, and appropriate operational speed when shredding to degree appropriate to the mesh size of 5-10 mm. The physicochemical properties of waste with code 19 12 12 mean that it can melt when cut with knives in a high-speed shredder unsuitable for this purpose.

In an exemplary embodiment of the method, additives for mineral-asphalt mixtures are manufactured during the waste processing in a mechanical waste processing installation with appropriate environmental protection permits. During the process, an authorized employee analyzes the product in accordance with internal procedures to confirm that it meets the requirements specified in the National Technical Assessment. For this purpose, samples of appropriate weight are collected. An authorized employee uses an external micrometer or microscope to check the fiber length and thickness of the collected material, visually inspects and analyzes the collected waste samples, and organoleptically assesses their appearance and smell. The moisture content of the collected waste samples is checked using a dipstick moisture meter. The metal content of the collected sample is also checked using a magnet.

In order to confirm whether the classification requirements have been met, the additive for mineral-asphalt mixture is analyzed for the relative content of oversized and undersized particles in the screenings.

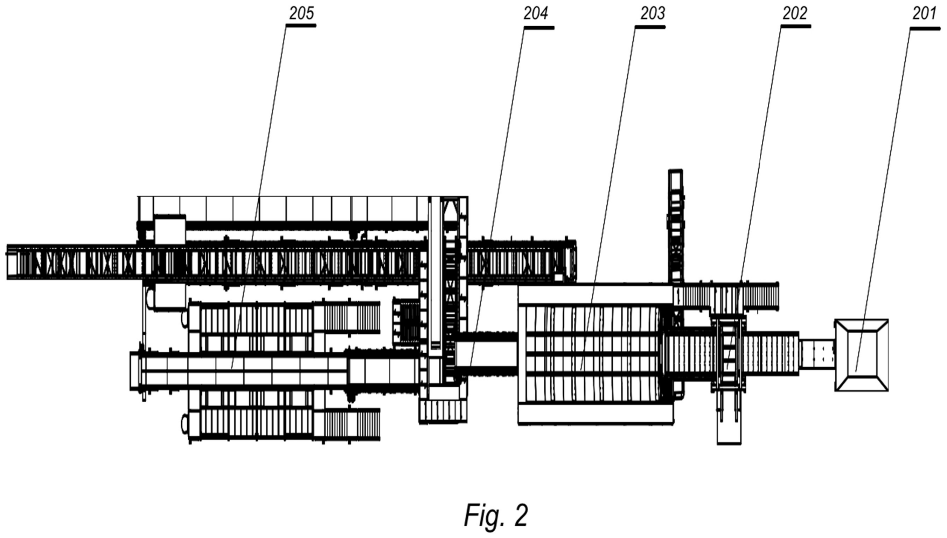

The first part of the device for manufacturing additives for mineral-asphalt mixtures according to the invention, i.e. an installation for shredding and screening waste through an 80 mm mesh screen, is shown in Fig. 2.

The separation of the waste fraction with a size above 80 mm that is not suitable for reuse begins in the installation containing a feed hopper with a pre-shredder 201. The pre-shredded waste is sent to a separator 202 via a conveyor belt from a set of conveyor belts 204, and then to a separation screen with a mesh size above 80 mm 203. The separation of the individual fractions takes place in a sorting cabin 205. The first step of the method according to the invention is carried out in this part of the device.

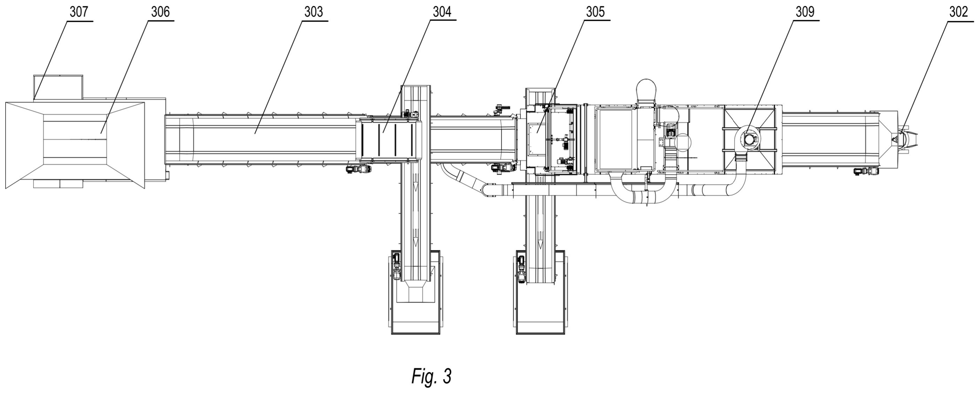

The second part of the device for manufacturing additives for mineral-asphalt mixtures according to the invention, i.e., an installation for separating waste fractions screened using a mesh size of less than 35 mm, is shown in Fig. 3.

The separation of waste fractions screened using a mesh size of less than 35 mm takes place in an installation consisting of a feed hopper and a pre-shredder 302, a set of conveyor belts 303, a magnetic separator 304, a 35 mm separation screen 307, an air separator 309, and two final shredders 306.

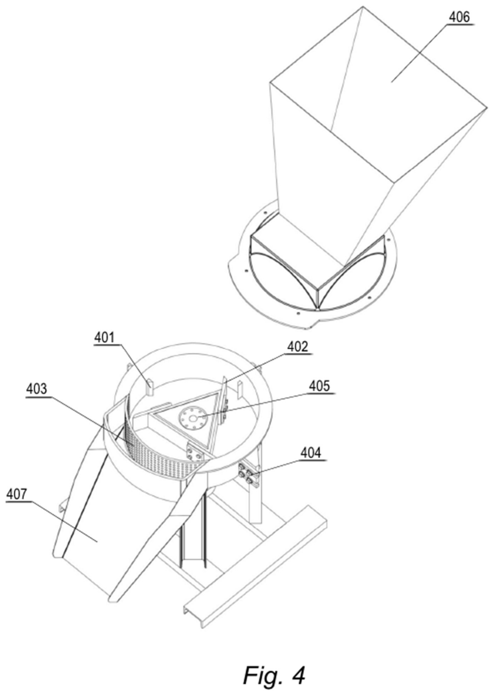

Fig. 4 shows a simplified view of a high-speed shredder with adjustable knife positions equipped with a screen with a mesh size of 5 to 10 mm 403, and a feed hopper 406, being the final element of the device for implementing the method according to the invention.

Shredding of the waste takes place in a chamber, for example a cylindrical one, equipped with counter-knives 401 and knives 402 mounted in a rotor connected to a shaft 405. In an exemplary embodiment, the rotor contains three knives, and the chamber contains three counter-knives, but this is not a limiting condition. The knife spacing can be adjusted manually, for example, using screws 404.

In an exemplary embodiment, the rotor is driven by an electric motor, but this is not a limiting condition.

The shredder chamber may be closed by a cover with a feed hopper 406. The screen 403 may form part of the shredder chamber wall. The finished product can be collected, for example, from discharge chute 407.

The technical data of an exemplary high-speed shredder with a screen for use in the solution according to the invention are presented in the Table 1 below.

**Table 1**

| | |
|---|---|
| Shredder throughput | 27.5 [Mg/h] |
| Shredder weight | 150 [kg] |
| Length | 100 [cm] |
| Width | 120 [cm] |
| Height | 185 [cm] |
| Shredder housing material | Hardox steel plate, 500 hrc |
| Drive | electric |
| Motor power | 11 [kW] |
| Shaft rotational speed | 1300/1450 [RPM] |
| Shaft material | Hardox steel plate, 450 hrc |
| Control | manual switching on |
| No. of knives in the shaft | 6 [pcs.] |
| Knife type | flat |
| Knife length | 18 [cm] |
| Knife width | 11 [cm] |
| Knife spacing | approx. 50 [cm] |
| Knives to screen distance | 5/7 [cm] |
| Knives to counter-knives distance | approx. 2/5 mm |
| Knife positioning | manual |
| Knife material | Hardox steel plate, 400 hrc |
| Screen length | 700 [mm] |
| Screen width | 250 [mm] |
| Mesh size | 5-10 [mm] |
| Mesh type | round |
| Material | Hardox steel plate, 500 hrc |

Additives for mineral-asphalt mixtures made by the method according to the invention can be used in hot-mix mixtures using standard road bitumens and those modified with thermoplastic elastomers, as well as mineral-asphalt mixtures using asphalt granulate (reclaimed material) from recycled asphalt pavements.

According to the invention, the additives are obtained in the recycling process of waste with code 19 12 12, i.e., waste from mechanical processing from the municipal waste stream (oversized fraction), by shredding it until a very fine material is obtained, for example, in a system of two low-speed shredders.

A fibrous additive for mineral-asphalt mixtures, with the proposed trade name PROXI W, used as a mastic stabilizer in a stored mineral-asphalt mixtures, consists primarily of polyester fibers, cellulose fibers, and rubber grains. It is a thermally stable, fibrous product, beige-brown in color with black inclusions in an exemplary embodiment. The additive reduces mixture segregation by retaining the mastic on the aggregate grains during storage of the mixture (especially the discontinuous mixture) in a silo or during transport to the construction site. It improves the homogeneity of the mixture before compaction, resulting in extended durability of road surfaces. Fibrous additives are added to the mixer during the production of the mineral-asphalt mixture.

The granular additive, with the proposed trade name PROXI Z, consists of fine and coarse polymer grains and a small amount of fiber and it is intended for use in road construction as an additive for hot-mix asphalt mixtures, such as asphalt concrete. The use of this additive increases the stiffness and resistance of the surface to permanent deformation and increases its void content without compromising water resistance, resulting in extended road surface durability.

The physical properties of the exemplary additives for mineral-asphalt mixtures according to the invention are presented in Table 2 below.

**Table 2**

| **No.** | **Type** | **Feature** | **Value** | **Unit** | **Test/calc. methods** |
|---|---|---|---|---|---|
| 1 | **PROXI W** | smell | neutral | - | organoleptic |
| 2 | | appearance | brown fibers with black inclusions | - | organoleptic |
| 3 | | fiber length | ≤ 2.5 | mm | PW/001 |
| 4 | | fiber thickness | ≤ 0.15 | mm | PW/002 |
| 5 | **PROXI Z** | smell | neutral | - | organoleptic |
| 6 | | appearance | colored granules | - | organoleptic |
| 7 | | difference in oversized and undersized grain content after screening by 5 mm mesh | ≤ 15 | % | PZ/004 |
| 8 | | metal content by weight | ≤ 2 | % | PZ/005 |

The above embodiments serve only as an illustration of the inventive idea and in no way constitute a limitation of the scope of patent protection, which is defined in the following patent claims.

## Claims

1. A method for manufacturing additives for mineral-asphalt mixtures from unsorted mixed municipal waste, in which the waste is mechanically shredded and the non-reusable fraction is separated therefrom by separation screens and a ferromagnetic separator,
**characterized in that** the pre-shredded and screened waste is subjected to final shredding (131) in a high-speed shredder equipped with cutting knives (402) and counter-knives (401) with adjustable positions, and a screen with a mesh size substantially less than 25 mm, preferably less than 15 mm, most preferably in the range of substantially 5 to 10 mm, wherein the distance between the cutting knives and the screen is set in the range of 2 to 11 cm, preferably 5 to 7 cm, most preferably 4 to 6 cm.

2. The method according to claim 1 **characterized in that** the distance between the knives (402) and the counter-knives (401) is set in the range of 1 to 7 mm, preferably in the range of 2 to 6 mm.

3. The method according to claim 1 **characterized in that** prior to shredding in the high-speed shredder, the waste is shredded and the fraction of waste substantially larger than 35 mm is separated (120) therefrom using a separation screen, an air separator, and a ferromagnetic separator.

4. The method according to claim 1 or 2 **characterized in that** prior to separating the fraction of waste substantially larger than 35 mm, the fraction of waste substantially larger than 80 mm that is not suitable for reuse is separated (110) using a separation screen and a ferromagnetic separator.

5. The method according to claim 1 **characterized in that** the rotational speed of the high-speed shredder shaft (405) is selected in the range of 1200 to 1550 rpm.

6. The method according to claim 1 to 5 **characterized in that** in order to obtain a mastic stabilizer (132) used as an additive for stored mineral-asphalt mixtures, the distance between the cutting knives (402) of the high-speed shredder and the screen (403) is set in the range of 3 to 7 cm, preferably 4 to 6 cm, the distance between the knives (402) and the counter-knives (401) is set in the range of 1 to 4 mm, preferably 2 to 4 mm, and the rotational speed of the shaft (405) is set in the range 1350 to 1550 rpm.

7. The method according to any of claims 1 to 5 **characterized in that** in order to obtain an additive introduced to hot-mix mineral-asphalt mixtures (133), the distance between the cutting knives (402) of the high-speed shredder and the screen (403) is set in the range of 6 to 10 cm, preferably 7 to 9 cm, the distance between the knives (402) and the counter-knives (401) is set in the range of 3 to 7 mm, preferably 4 to 6 mm, and the rotational speed of the shaft (405) is set in the range of 1200 to 1400 rpm.

8. he method according to claim 1 **characterized in that** the degree of pre-shredding of the waste fraction fed to the high-speed shredder is selected so as to avoid melting of the processed waste fraction in the high-speed shredder.

9. A device for manufacturing additives for mineral-asphalt mixtures from unsorted mixed municipal waste, equipped with feed hoppers, shredders, ferromagnetic separators, separation screens, and an air separator,
**characterized in that** it is further equipped with a high-speed shredder equipped with cutting knives (402) and counter-knives (401) with adjustable positions, and a separation screen (403) with a mesh size substantially less than 25 mm, preferably less than 15 mm, most preferably in the range of substantially 5 to 10 mm.

10. The device according to claim 9 **characterized in that** the high-speed shredder is adapted to adjust the distance between the knives (402) and the counter-knives (401) in the range of 1 to 7 mm, preferably 2 to 6 mm.

11. The device according to claim 9 or 10 **characterized in that** the high-speed shredder is adapted to adjust the distance between the cutting knives (402) and the screen (403) in the range of 2 to 11 cm, preferably in the range of 5 to 7 cm, most preferably in the range of 4 to 6 cm.

12. The device according to claim 9, 10, or 11 **characterized in that** the separation screen in the shredder located upstream the high speed shredder in the technological chain, has a mesh size preferably below 45 mm, more preferably below 40 mm, and most preferably below 35 mm.

13. The device according to claim 9, 10, or 11 **characterized in that** at least two shredders with separation screens of different mesh sizes are installed upstream the high-speed shredder in the technological chain.

14. An additive for mineral-asphalt mixtures manufactured from unsorted mixed municipal waste by the method according to any of claims 1 to 8.
